# EUROPEAN PATENT APPLICATION

(11) **EP 4 030 364 A1**
(43) Date of publication of application: **20.07.2022**
(21) Application number: 20862255.5
(22) Date of filing: 26.08.2020
(51) Int. Cl.: G06Q 10/06, G06Q 10/10, G05B 19/418, G06Q 50/04

(54) **MANAGEMENT APPARATUS, MANAGEMENT SYSTEM, AND PROGRAM**

(30) Priority: 11.09.2019 JP 2019165515; 30.07.2020 JP 2020129192
(71) Applicant: Kobayashi Manufacture Co., Ltd., Hakusan-shi, Ishikawa 924-0855 (JP)
(72) Inventor: KOBAYASHI, Yasunori, Hakusan-shi, Ishikawa 924-0855 (JP)
(74) Representative: Haseltine Lake Kempner LLP
(86) International application number: PCT/JP2020/032210
(87) International publication number: WO 2021/049299

(57) **Abstract**

A group creation unit creates in accordance with predetermined conditions at least one group that includes at least one of a plurality of products to be manufactured. A schedule creation unit creates a schedule for manufacturing the plurality of products for each of the at least one group. A display control unit displays on a display unit the schedule for each of the at least one group, together with information on a task for manufacturing each of the at least one of the plurality of products included in the at least one group.

## Description

### Technical Field

The present invention relates to a technique for managing a work process.

### Background Art

A technique for production management is known. For example, Patent Literature 1 discloses a technique for creating a production schedule in a production process in a factory or the like, using a computer. Patent Literature 2 discloses a technique for production process management, particularly for managing process planning, progress results, and productivity.

### Citation List

### Patent Literatures

Patent Literature 1: JP 4319026B
Patent Literature 2: JP 4230852B

### Summary of Invention

### Technical Problem

When there are many products to be manufactured, displaying a task schedule for product manufacture for each of the products may result in too many items and make it difficult to grasp the task schedule.

An object of the present invention is to make it easier to see a task schedule for product manufacture, even when there are many products to be manufactured.

### Solution to Problem

The present invention provides a management apparatus including: a group creation unit that creates in accordance with predetermined conditions at least one group that includes at least one of a plurality of products to be manufactured; a schedule creation unit that creates a schedule for manufacturing the plurality of products for each of the at least one group; and a display control unit that displays on a display unit the schedule for each of the at least one group, together with information on a task for manufacturing each of the at least one of the plurality of products included in the at least one group.

The predetermined conditions may include a condition that the at least one of the plurality of products has the same delivery destination and the same delivery date, and the at least one of the plurality of products included in the at least one group may satisfy the predetermined conditions.

The predetermined conditions may further include a condition that the at least one of the plurality of products that has the same delivery destination and the same delivery date is to be manufactured using a diagram already used for another product manufactured by a worker, the at least one of the plurality of products included in the at least one group may satisfy the predetermined conditions, and the schedule creation unit may assign to the worker a task of manufacturing the at least one group.

The display control unit may display on the display unit a Gantt chart that represents the schedule for each of the at least one group for each of at least one worker.

The display control unit that may display on the display unit a list of an individual schedule for a target group from among the schedule, together with information on a task for manufacturing each of the at least one of the plurality of products included in the target group, the target group being assigned to a designated worker.

The display control unit may display on the display unit the list of the individual schedule together with progress information on the task for manufacturing each of the at least one of the plurality of products included in the target group.

The plurality of products may be manufactured using a plurality of manufacturing processes, and the list of the individual schedule may include status information on a task in a manufacturing process, from among the plurality of manufacturing processes, carried out immediately prior to a target manufacturing process carried out by the designated worker.

The list of the individual schedule may include status information on a task in a target manufacturing process carried out by the designated worker.

The group creation unit may additionally create at least one subgroup that includes at least one of the plurality of products in accordance with another condition that is different from the predetermined conditions, the schedule creation unit may additionally create a schedule for each of the at least one subgroup, and the display control unit may display on the display unit the schedule for each of the at least one subgroup.

The other condition may include a condition that the at least one of the plurality of products has the same color or is made of the same material.

The plurality of products may be manufactured using a plurality of manufacturing processes, and when there is a delay in the schedule for a target manufacturing process, from among the plurality of manufacturing processes, carried out to manufacture the at least one of the plurality of products included in the at least one group, the display control unit may display a warning on the schedule for a manufacturing process that is prior to the target manufacturing process.

The present invention also provides a management system including a management apparatus and a terminal apparatus, wherein the management apparatus includes: a group creation unit that creates in accordance with predetermined conditions at least one group that includes at least one of a plurality of products to be manufactured; a schedule creation unit that creates a schedule for manufacturing the plurality of products for each of the at least one group; and a display control unit that displays on a display unit the schedule for each of the at least one group, together with information on a task for manufacturing each of the at least one of the plurality of products included in the at least one group, and the terminal apparatus includes the display unit.

Furthermore, the present invention provides a program for enabling a computer to carry out: a step of creating in accordance with predetermined conditions at least one group that includes at least one of a plurality of products to be manufactured; a step of creating a schedule for manufacturing the plurality of products for each of the at least one group; and a step of displaying on a display unit the schedule for each of the at least one group, together with information on a task for manufacturing each of the at least one of the plurality of products included in the at least one group.

### Advantageous Effects of Invention

According to the present invention, it is possible to make it easier to see a task schedule for product manufacture, even when there are many products to be manufactured.

### Brief Description of Drawings

FIG. 1 is a diagram showing an example of a configuration of management system 100.
FIG. 2 is a diagram showing an example of a hardware configuration of server apparatus 110.
FIG. 3 is a diagram showing an example of a functional configuration of server apparatus 110.
FIG. 4 is a diagram showing an example of database 140.
FIG. 5 is a diagram showing an example of schedule 141.
FIG. 6 is a diagram showing an example of overall schedule screen 150.
FIG. 7 is a diagram showing an example of a schedule list.
FIG. 8 is a diagram showing an example of detailed information.
FIG. 9 is a diagram showing an example of results information.
FIG. 10 is a diagram showing an example of work time setting screen 180.
FIG. 11 is a diagram showing an example of individual schedule screen 160.
FIG. 12 is a diagram showing an example of a field diagram.
FIG. 13 is a diagram showing an example of a field diagram.
FIG. 14 is a diagram showing an example of a development view.
FIG. 15 is a diagram showing an example of a development view.
FIG. 16 is a diagram showing an example of a process instruction diagram.
FIG. 17 is a diagram showing an example of a work procedure view.
FIG. 18 is a diagram showing an example of changing screen 170 for a worker.

### Description of Embodiments

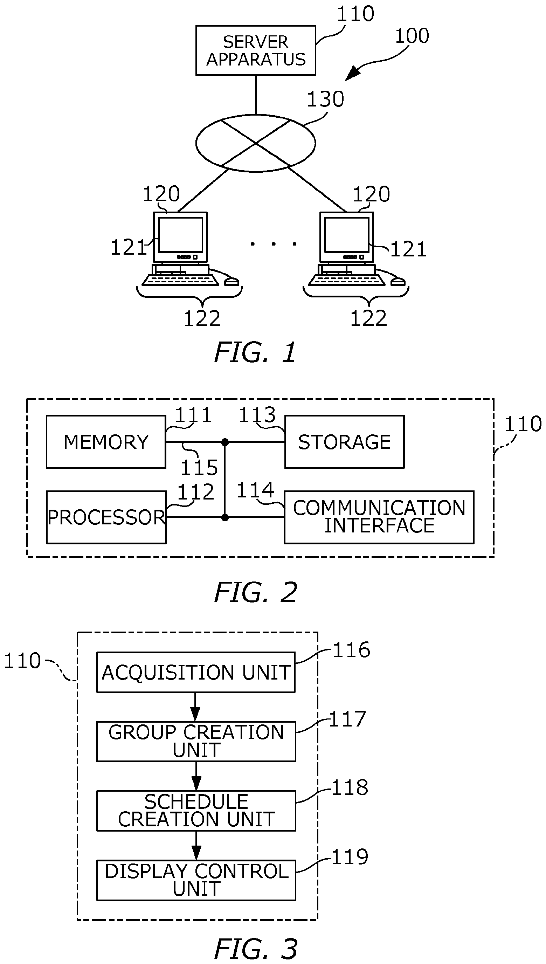

FIG. 1 is a diagram showing an example of a configuration of management system 100 according to the present embodiment. Management system 100 is used to manage the production of products. "Products" here refers to articles to be manufactured. "Products" is meant to include not only articles but also parts of the articles. For example, management system 100 may be used to manage the production of sheet metal products. The processes of manufacturing sheet metal products include, for example, an order receiving process, a bending process, a welding process, and so on. These processes have a predetermined order. Different products require different manufacturing processes. In a factory, materials and diagrams used to manufacture products are sequentially moved to locations where processes are to be carried out.

Generally, in the manufacture of sheet metal products, the number of products to be manufactured is large. Therefore, in the present embodiment, products that are considered desirable to be collectively manufactured are grouped together for manufacturing. In this case, the materials and diagrams used to manufacture the products are also moved together in units of groups, and therefore production management is also basically carried out in unit of groups. Note that there are cases in which one product in a group undergoes a task of a certain process, but another product in the same group does not undergo the task of this process. Even in such cases, the materials and diagrams to be used to manufacture the products are moved together to a location where the process is to be carried out, but the task of the process is not to be performed on the other product.

Management system 100 includes server apparatus 110 (an example of the management apparatus) and a plurality of terminal apparatuses 120. Server apparatus 110 and terminal apparatuses 120 are connected to each other via communication network 130. Server apparatus 110 creates a task schedule for manufacturing products. Terminal apparatuses 120 are used by users such as workers or administrators, and display the schedule created by server apparatus 110.

FIG. 2 is a diagram showing an example of a hardware configuration of server apparatus 110. Server apparatus 110 includes memory 111, processor 112, storage 113, and communication interface 114. These hardware elements are connected with each other via bus 115.

Memory 111 stores a program that is to be executed by processor 112. For example, a ROM (Read Only Memory) or a RAM (Random Access Memory) may be used as memory 111. Processor 112 controls each unit in server apparatus 110 by executing the program stored in memory 111, to perform processing to create a task schedule for manufacturing products. For example, a CPU (Central Processing Unit) may be used as processor 112. Storage 113 stores various kinds of data that are to be used to create or display the task schedule for manufacturing products. For example, a hard disk drive or an SSD (Solid State Drive) may be used as storage 113. Communication interface 114 is connected to communication network 130, and transmits and receives various kinds of data to and from server apparatus 110 via communication network 130.

Returning to FIG. 1, each terminal apparatus 120 includes display unit 121 and operation unit 122 in addition to the same configuration as server apparatus 110. Display unit 121 displays various screens that indicate a task schedule for manufacturing products. For example, a liquid crystal display may be used as display unit 121. Operation unit 122 accepts various kinds of operations input by a user via the screen displayed on the display unit 121. For example, a keyboard, a mouse, or a touch panel may be used as operation unit 122. FIG. 1 shows an example in which terminal apparatus 120 is a personal computer. However, terminal apparatus 120 is not limited to a personal computer, and may be any device such as a tablet terminal or a smartphone if it can display a screen provided from server apparatus 110.

FIG. 3 is a diagram showing an example of a functional configuration of server apparatus 110. Server apparatus 110 functions as acquisition unit 116, group creation unit 117, schedule creation unit 118, and display control unit 119. These functions are realized through cooperation of the program stored in memory 111 and processor 112 that executes the program, in which processor 112 performs computation, or controls operations of other hardware elements.

Acquisition unit 116 acquires various kinds of information that are used to create a schedule for manufacturing products, or create a screen that shows this schedule. Acquisition unit 116 may acquire information from storage 113, or acquire information from an external apparatus. The information to be acquired by acquisition unit 116 includes information that is contained in database 140 stored in storage 113.

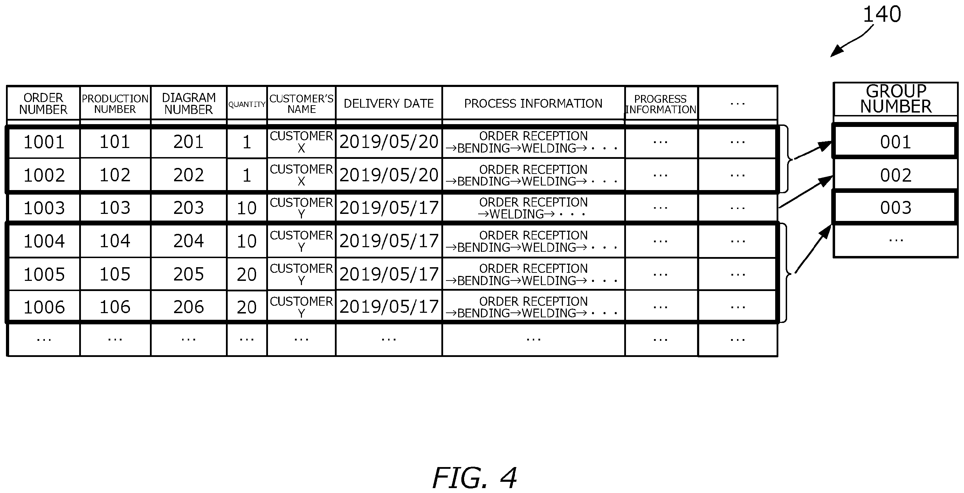

FIG. 4 is a diagram showing an example of database 140. In the example shown in FIG. 4, database 140 is constituted by a single table, but it may be constituted by a plurality of tables. The data structure of database 140 is not limited to the example shown in FIG. 4, and it may be any data structure. Database 140 stores master data that indicates services ordered by customers. For example, upon receiving an order from a customer, the user operates operation unit 122 to input master data. The input master data is transmitted from terminal apparatus 120 to server apparatus 110, and is stored in database 140. Note that some pieces of data in the master data may be acquired from another database.

Master data includes an order number, a production number, a diagram number, a quantity, a customer's name (an example of the delivery destination), a delivery date, process information, and progress information. The order number is information that uniquely identifies a customer's order. The production number is information that uniquely identifies the products ordered by the customer. The diagram number is information that uniquely identifies the diagram to be used to manufacture the products ordered by the customer. The quantity is the number of products ordered by the customer. The customer's name is information that uniquely identifies the customer who placed the order. The delivery date is the date by which the products ordered by the customer is to be delivered to the customer. Process information is information that indicates the process through which the products ordered by the customer are manufactured. Progress information is information that indicates the progress of the task of manufacturing the products ordered by the customer.

For example, upon receiving an order from customer X to deliver one product by May 20, 2019, an order number "1001" assigned to this order, a production number "101" assigned to this product, a diagram number "201" assigned to the diagram used to manufacture this product, a quantity "1", a customer's name "customer X", a delivery date "2019/05/20", and process information "order -> bending -> welding -> ..." that indicates the ordering process, the bending process, the welding process, ... required to manufacture this product are stored in database 140 in association with each other.

Upon the task of the ordering process regarding this order being complete, the user operates operation unit 122 to input progress information that indicates that the task of the ordering process has been completed. This progress information may include, for example, the name of the task of the ordering process, the name of the worker who performed the task of the ordering process, and the work date of the ordering process. The input progress information is transmitted from terminal apparatus 120 to server apparatus 110, and is stored in database 140 in association with the order number "1001". In the same manner, upon that the task of any of the other processes being complete, progress information is input in response to the user's operation, and is stored in database 140.

Returning to FIG. 3, group creation unit 117 creates a group that includes at least one kind of product of the plurality of kinds of products to be manufactured, according to predetermined conditions. The predetermined conditions indicate at least one kind of product on which production management are preferably performed collectively. For example, the predetermined conditions include a condition indicating the same delivery destination and the same delivery date. In this case, a group that includes products that satisfy the predetermined conditions, i.e., products with the same delivery destination and the same delivery date, is created.

For example, in the case of database 140 shown in FIG. 4, the product with the production number "101" and the product with the production number "102" have the same customer's name "Customer X" and the same delivery date "2019/05/20". In this case, these products are grouped into a single group and are given a group number "001" that uniquely identifies this group. Thereafter, the master data including the order numbers "1001" and "1002" and stored in database 140, and this group number "001", are associated with each other.

The predetermined conditions may include a condition that the delivery destination and the delivery date are the same, and that the products are to be manufactured using the same diagram as a product manufactured through a task carried out by the worker in the past. In this case, a group that includes products that satisfy the predetermined conditions, i.e., products that have the same delivery destination and the same delivery date, and are manufactured using the same diagram as a product manufactured through a task carried out by the worker in the past, is created.

For example, in the case of database 140 shown in FIG. 4, the products with the production numbers "103" to "106" have the same customer's name "Customer Y" and the same delivery date "2019/05/17". Here, diagrams with the diagram numbers "203" to "206" are used to manufacture products with the production numbers "103" to "106", respectively. The diagram with the diagram number "203" of these diagrams is a new diagram. On the other hand, the diagrams with the diagram numbers "204" to "206" are known diagrams, where the same diagrams have been used in the past to manufacture products. Whether a diagram is a new diagram or a known diagram may be determined based on the work history, for example. In this case, the products with the production number "103" are grouped into a single group and are given a group number "002" that uniquely identifies this group. Thereafter, the master data including the order number "1003" and stored in database 140, and this group number "002", are associated with each other. Also, the products with the production numbers "104" to "106" are grouped into a single group and are given a group number "003" that uniquely identifies this group. Thereafter, the master data including the order numbers "1004" to "1006" and stored in database 140, and this group number "003", are associated with each other.

Schedule creation unit 118 creates schedule 141 for manufacturing products in units of groups created by group creation unit 117. Schedule 141 created by schedule creation unit 118 is stored in storage 113. The "schedule" mentioned here refers to the production plan for products. The creation of schedule 141 includes the assignment of workers and schedule planning for each group. The assignment of workers and the schedule planning is carried out so that the delivery date is met.

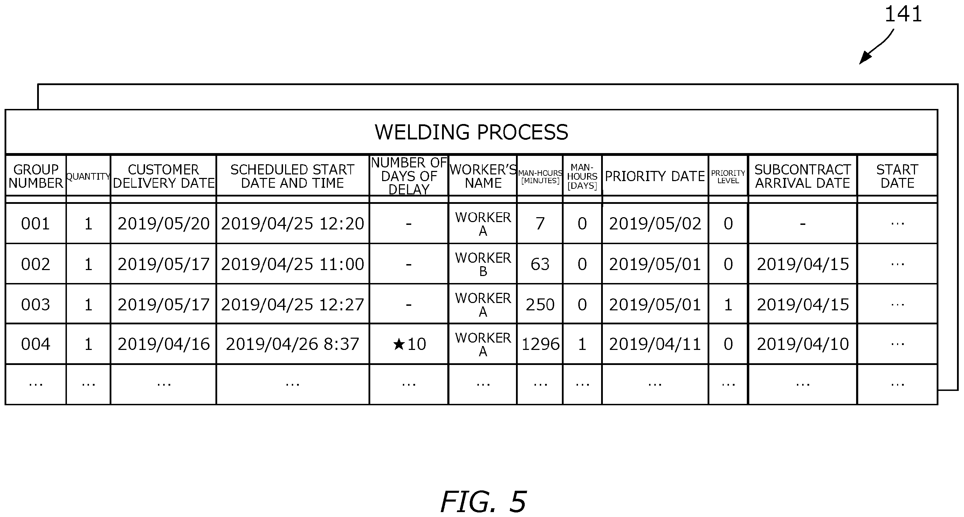

FIG. 5 is a diagram showing an example of schedule 141. Schedule 141 is created for each process. Although FIG. 5 only shows schedule 141 for the welding process, similar schedules 141 are created for other processes. Schedule 141 includes the group number, the quantity, the customer delivery date, the scheduled start date and time, the number of days of delay, the worker's name, the man-hours [minutes], the man-hours [days], the priority date, the priority level, the subcontract arrival date, and the start date.

The group number is information that uniquely identifies the group. The quantity indicates the number of groups. The customer delivery date indicates the date by which the group is to be delivered to the customer. For this customer delivery date, the delivery date of the products included in the group is used. The scheduled start date and time is the scheduled date and time when the task of manufacturing the group is to be started. The number of days of delay indicates the number of days of delay from the delivery date. The number of days of delay is input when the scheduled start date and time is set to be later than the delivery date and time. The number of days of delay is the difference in the number of days between the scheduled start date and the delivery date. The worker's name is information that identifies the worker to which the task of manufacturing the group is assigned. The man-hours [minutes] is the time required to complete the task of manufacturing the group. The number of man-hours [minutes] is, for example, the total time required to complete the task of manufacturing the products included in the target group. The time required to complete the task of manufacturing each product may be determined in advance for each process or task, or calculated for each worker based on the work history, or set in advance by the workers themselves. The man-hours [days] is the number of days required to complete the task of manufacturing the group. The man-hours [days] is calculated based on the time required to complete the task of manufacturing the group.

The priority date is the deadline for starting the task, determined according to the delivery date. For example, if the task of the welding process needs to be started on May 2, 2019 at the latest in order that the task of manufacturing the group with the group number "001" will be complete by the deadline, then the priority date for this group is May 2, 2019. The priority level is the priority of the task of the group. For example, a value between 0 and 50 is used as the priority level. 0 indicates the highest priority level, and the larger the value, the lower the priority level. The subcontract arrival date is the date when the parts required for the task arrive from the subcontractor. The subcontract arrival date is input if the parts required for the task are subcontracted. The start date is the date when the worker actually started the task. For example, the priority date, the priority level, the subcontract arrival date, and the start date are input in response to the operation performed by the user on operation unit 122, and are transmitted from terminal apparatus 120 to server apparatus 110 and are stored in schedule 141.

The assignment of workers may be performed using a known technique. For example, the assignment of workers is performed based on the spare capacity of each worker according to their abilities and load status. However, a task of one group and a task of another group that is to be performed in parallel with that task of one group are to be assigned to different personnel. For example, if worker A for a welding process has spare time, the task of the welding process for the group with the group number "001" shown in FIG. 5 is to be assigned to worker A. In this case, as shown in FIG. 5, the worker's name "worker A" is stored in association with the group number "001".

If the task of manufacturing products was performed in the past using the same diagram, the task may be assigned to the worker who performed the task. For example, the group with the group number "003" shown in FIG. 5 includes products with the production numbers "104" to "106" as shown in FIG. 4, and as mentioned above, known diagrams are used to manufacture these products. For example, if worker A performed a task of the welding process using a known diagram in the past, the task of the welding process for the group with the group number "003" is to be assigned to worker A. In this case, as shown in FIG. 5, the worker's name "worker A" is stored in association with the group number "003".

Furthermore, some tasks may be assigned to a group of a plurality of workers instead of individual workers. For example, a task that does not change much in terms of work results or work efficiency regardless of which worker performs it may be assigned to a group of a plurality of workers who are capable of performing that task. In such a case, one of the workers belonging to this group will perform this task.

The schedule planning may be performed using a known technique. For example, in schedule planning, the scheduled start date and time of the task of each group is set. At this time, the scheduled start date and time for the task of each process for each group is set so that the task of the next process starts after the task of the previous process for the group is complete. For example, database 140 shown in FIG. 4 indicates that the welding process is performed after the ordering process and the bending process on the group with the group number "001". In this case, the scheduled start date and time of the task of the welding process for the group with the group number "001" is set to be later than the scheduled end date and time of the task of the bending process. Schedule 141 shown in FIG. 5 indicates that the group with the group number "003" has the subcontract arrival date of April 15, 2019. In this case, the scheduled start date and time of the task for the group with the group number "003" is set to April 15, 2019 or later.

Furthermore, the scheduled start date and time of the task for each group is set to be within the actual working hours of the worker to which the task for the group is assigned. That is to say, the scheduled start date and time of the task for each group is not to be set within the break time or holiday time of the worker to which the task for the group is assigned. For example, if 12:20, April 25, 2019 is included in the actual working hours of worker A to which the task for the group with the group number "001" is assigned, the scheduled start date and time of the task of the welding process for this group is set to 12:20, April 25, 2019. In this case, as shown in FIG. 5, the scheduled start date and time "2019/04/25 12:20" is stored in association with the group number "001".

Note that, if the task for a group starts from the scheduled start date and time of the task for the group, and this task is not complete within the actual working hours of the worker to which the task for the group is assigned, the task for the group may be divided and assigned to the actual working hours, using the method described in WO 2019/142743, for example.

Furthermore, the scheduled start date and time of the task for each group is set so that the period in which the task for one group assigned to a worker is to be performed and the period in which the task for another group assigned to the same worker is to be performed do not overlap each other. For example, as shown in FIG. 5, if the scheduled start date and time of the task of the welding process for the group with the group number "001" assigned to worker A is set to 12:20, April 25, 2019, the scheduled start date and time of the task of the welding process for the group with the group number "003" assigned to worker A is set to 12:27, April 25, 2019 because the man-hours of the welding process for this group is 7 minutes. In this case, as shown in FIG. 5, the scheduled start date and time "2019/04/25 12:27" is stored in association with the group number "003".

Display control unit 119 displays various screens created based on schedule 141 created by schedule creation unit 118 and the information acquired by acquisition unit 116, on terminal apparatus 120. For example, display control unit 119 transmits display data for displaying a screen, to the terminal apparatus 120, so that display unit 121 displays a screen corresponding to the display data. Various screens include overall schedule screen 150 and individual schedule screen 160. Overall schedule screen 150 shows the schedule of the tasks to be performed by all workers. Individual schedule screen 160 shows the schedule of the tasks to be performed by each individual worker.

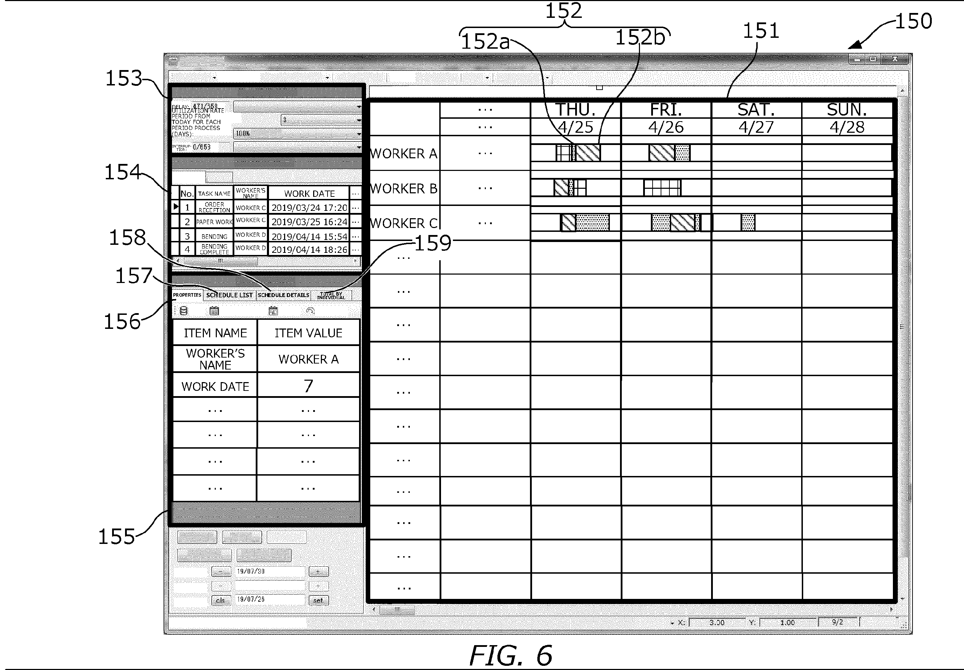

FIG. 6 is a diagram showing an example of overall schedule screen 150. Overall schedule screen 150 includes areas 151 and 153 to 155. Area 151 displays a Gantt chart (an example of a schedule for each group). The Gantt chart shows schedule 141 of each group, for each worker. The horizontal axis of the Gantt chart indicates time. Workers or groups of workers are placed on the vertical axis of the Gantt chart. Horizontal bar 152 of the Gantt chart indicates a task schedule for a group. Horizontal bar 152 is color-coded for each customer.

For example, schedule 141 in FIG. 5 shows that the task for the group with the group number "001" is assigned to worker A, the scheduled start date and time of this task is 12:20, April 25, 2019, and the man-hours of this task is 7 minutes. In this case, in the Gantt chart, as shown in FIG. 6, horizontal bar 152a that extends from a position corresponding to 12:20, April 25, 2019 by a length corresponding to 7 minutes is placed in the schedule field for worker A. Also, schedule 141 in FIG. 5 shows that the task for the group with the group number "003" is assigned to worker A, the scheduled start date and time of this task is 12:27, April 25, 2019, and the man-hours of this task is 250 minutes. In this case, in the Gantt chart, as shown in FIG. 6, horizontal bar 152b that extends from a position corresponding to 12:27, April 25, 2019 by a length corresponding to 250 minutes is placed in the schedule field for worker A. In addition, as shown in FIG. 4, the customer of the group with the group number "001" and the customer of the group with the group number "003" are different, and therefore horizontal bar 152a and horizontal bar 152b have different colors.

If the task for a group is divided and assigned, the Gantt chart may show, in addition to horizontal bars representing the plurality of periods to which the divided tasks are assigned, a horizontal bar representing the period sandwiched between these periods, using the method described in WO 2019/142743, for example.

Area 153 displays production management information. Production management information includes, for example, the number of delayed cases, the number of interruptions, and a utilization rate period from today for each period process [days]. Area 154 displays progress information. For example, when a product with the production number "001" is selected in response to an operation performed by the user on operation unit 122, area 154 displays progress information that is associated with the production number "001" in database 140 shown in FIG. 4.

Area 155 displays property information. Area 155 is provided with tabs 156 to 159. When tab 156 is selected in response to an operation performed by the user on operation unit 122, area 155 displays task information. Task information includes a worker's name to which a task is assigned, and work time, for example. Man-hours [minutes] may be used for this work time.

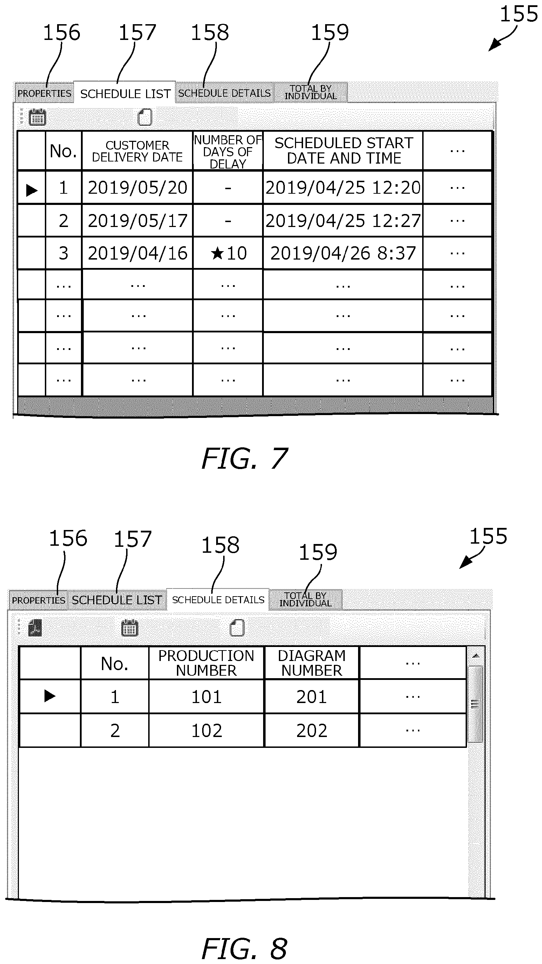

When tab 157 is selected in response to an operation performed by the user on operation unit 122, area 155 displays a schedule list (an example of a schedule for each group). FIG. 7 is a diagram showing an example of a schedule list. In FIG. 7, parts of overall schedule screen 150 other than area 155 are omitted from the illustration. The schedule list includes the information stored in schedule 141 shown in FIG. 5, for example. The schedule list may include information regarding all the items included in schedule 141 shown in FIG. 5, or only information regarding some of the items.

The schedule list is formed in units of workers, in units of days, or in units of workers and days. For example, if the worker named "worker A" is selected in response to an operation performed by the user on operation unit 122, area 155 displays a list of schedules for the tasks for all the groups assigned to worker A. Specifically, the information associated with the worker's name "worker A" in schedule 141 shown in FIG. 5 is displayed in area 155. If the date of April 25, 2019 is selected in response to an operation performed by the user on operation unit 122, area 155 displays a schedule list of tasks for all the groups scheduled to be performed on April 25, 2019. Specifically, the information associated with the scheduled start date and time that includes "2019/04/25" in schedule 141 shown in FIG. 5 is displayed in area 155.

When tab 158 is selected in response to an operation performed by the user on operation unit 122, detailed information for each product (an example of information regarding the task of manufacturing each individual product) is displayed in area 155. FIG. 8 is a diagram showing an example of detailed information. In FIG. 8, as in FIG. 7, parts of overall schedule screen 150 other than area 155 are omitted from the illustration. Detailed information includes the information stored in database 140 shown in FIG. 4, for example. Note that detailed information may include information regarding all the items stored in database 140 shown in FIG. 4, or information regarding only some of the items.

Detailed information is, as with the schedule list shown in FIG. 7, formed in units of workers, in units of days, or in units of workers and days. For example, when the worker "worker A" is selected in response to an operation performed by the user on operation unit 122, area 155 displays information regarding the tasks of manufacturing the products included in all the groups for which tasks are assigned to worker A. Specifically, the group number associated with the worker's name "worker A" is selected from schedule 141 shown in FIG. 5, and the information associated with this group number in database 140 shown in FIG. 4 is displayed in area 155. If the date of April 25, 2019 is selected in response to an operation performed by the user on operation unit 122, area 155 displays information regarding the tasks of manufacturing the products included in all the groups scheduled to be performed on April 25, 2019. Specifically, the group number associated with the scheduled start date and time that includes "2019/04/25" is selected from schedule 141 shown in FIG. 5, and the information associated with this group number in database 140 shown in FIG. 4 is displayed in area 155.

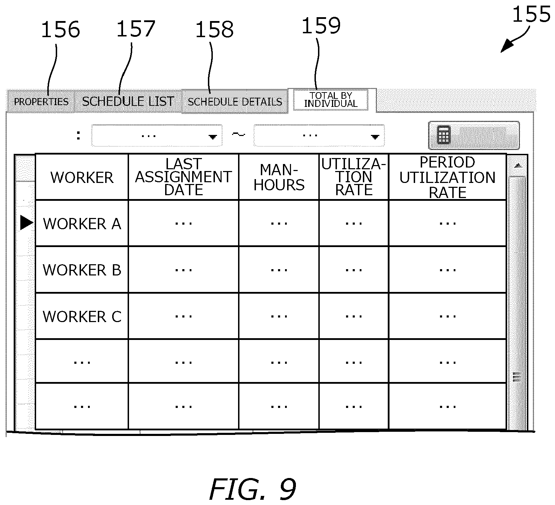

When tab 159 is selected in response to an operation performed by the user on operation unit 122, area 155 displays results information regarding each worker. FIG. 9 is a diagram showing an example of results information. Results information may include the last assignment date, the man-hours, the utilization rate, and the period utilization rate, for example. Results information may be obtained based on the work history of each worker, and stored in storage 113, for example. In addition, results information may be changed in response to an operation performed by the user on operation unit 122. These pieces of information stored in storage 113 are acquired by acquisition unit 116 and are used to create overall schedule screen 150.

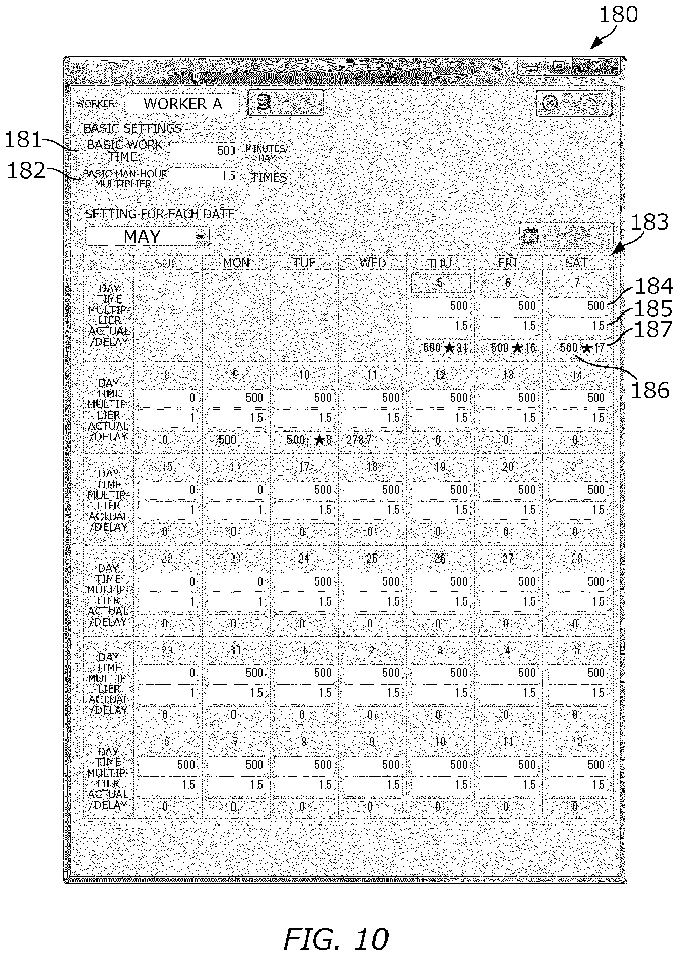

Returning to FIG. 6, in overall schedule screen 150, upon the user performing an operation to designate a worker and make an instruction to display work time setting screen 180 using operation unit 122, setting screen 180 that is to be used to set the work time of the designated worker is displayed. FIG. 10 is a diagram showing an example of work time setting screen 180. Setting screen 180 displays basic work time 181, basic man-hour multiplier 182, and calendar 183.

Basic work time 181 is basic work time determined for each worker. Basic man-hour multiplier 182 is a value that indicates a work speed. Basic man-hour multiplier 182 is normally set to 1, but if the work speed is faster than usual or work is performed by plurality of workers, a value greater than 1 is to be set. Each date field of calendar 183 displays scheduled work time 184 on the day, man-hour multiplier 185, actual work time 186, and number of days of delay 187.

Basically, basic work time 181 and basic man-hour multiplier 182 are used as scheduled work time 184 and man-hour multiplier 185 of the workday, respectively. However, scheduled work time 184 and man-hour multiplier 185 may be changed in response to an operation performed by the user on operation unit 122. For example, if the user wishes to change scheduled work time 184 for May 7 from 500 minutes to 400 minutes, the user may change scheduled work time 184 for May 7 from 500 minutes to 400 minutes by performing an operation using operation unit 122. For example, if the user works on a holiday on May 8, the user may change scheduled work time 184 for May 8 from 0 minutes to 500 minutes by performing an operation using operation unit 122.

Actual work time 186 is the total time required for the task assigned to the worker on the target date. Number of days of delay 187 is the number of days of delay occurring in the task assigned to the worker. If scheduled work time 184 or man-hour multiplier 185 is changed, the user's spare capacity and actual working hours will change, and therefore schedule 141 may be modified based on the user's spare capacity and actual working hours that have been changed. In such a case, number of days of delay 187 is changed based on schedule 141 that has been modified. For example, in order to simulate the change in number of days of delay 187 due to a change in a worker's scheduled work time 184, the administrator may change the worker's scheduled work time 184. As a result, the administrator can easily grasp number of days of delay 187 caused by the change in scheduled work time 184.

Returning to FIG. 6, in overall schedule screen 150, upon the user using operation unit 122 to designate a worker and make an instruction to display individual schedule screen 160, individual schedule screen 160 that displays the schedule of the task to be performed by the designated worker is displayed. Here, it is assumed that worker A is designated through the user's operation.

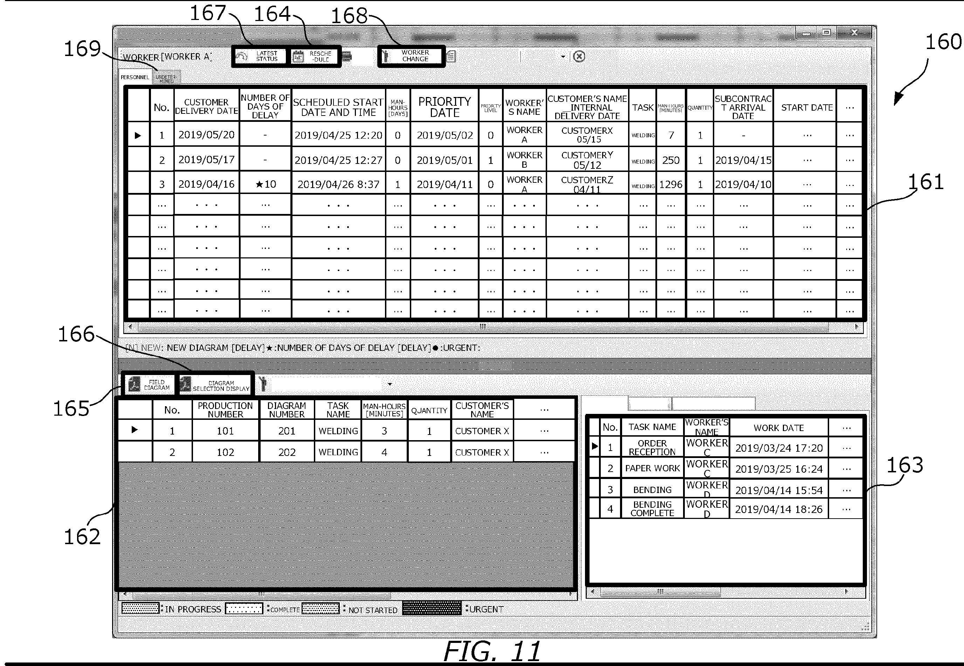

FIG. 11 is a diagram showing an example of individual schedule screen 160. Individual schedule screen 160 includes areas 161 to 163. Area 161 displays a list of individual schedules (an example of a schedule for each group) of the tasks for the group assigned to worker A (an example of the target group). For example, the list of individual schedules includes information that is associated with the worker's name "worker A" in schedule 141 shown in FIG. 5. The individual schedule list may include information regarding all the items associated with the worker's name "worker A" in schedule 141 shown in FIG. 5, or only information regarding some of the items. In addition to the delivery date designated by the customer, if the company that received the order has an internal delivery date, this internal delivery date may be included in the list of individual schedules.

If the list of individual schedules includes an urgent task, information to that effect may be added so that the urgent task can easily be recognized. For example, a letter or a symbol indicating the urgent task may be displayed in the field of the number of days of delay of the urgent task included in the list of individual schedules. Note that the urgent task may be designated in response to the user's operation performed on operation unit 122.

The individual schedules in the list area are arranged in order according to at least one of the following: the start date, the subcontract arrival date, the priority date, and the priority level. To determine the order, the start date, the subcontract arrival date, the priority date, and the priority level are used in this order of priority. For example, if start dates have been input, the individual schedules in the list will be arranged in ascending order of the start dates. If start dates have not been input or the start dates are the same, the individual schedules in the list will be arranged in ascending order of the subcontract arrival dates. If start dates and subcontract arrival dates have not been input or they are the same, the individual schedules in the list will be arranged in ascending order of the priority dates. If start dates and subcontract arrival dates have not been input and the priority dates are the same, the individual schedules in the list will be arranged in descending order of the priority levels. Individual schedule screen 160 is also provided with "reschedule" button 164. For example, if the user presses "reschedule" button 164 after performing an operation to input the start date or subcontract arrival date using operation unit 122, the start date or the subcontract arrival date is fixed and the individual schedule list is sorted according to the fixed start date or subcontract arrival date.

Area 162 displays detailed information regarding each product (an example of information regarding the tasks of manufacturing an individual product) in the group for which the tasks are assigned to worker A. For example, when the group with the group number "001" is selected in response to an operation performed by the user on operation unit 122, detailed information includes information that is associated with the group number "001" in the database 140 shown in FIG. 4, i.e., information regarding master data of the products with the product numbers "001" and "002". Note that detailed information may include information regarding all the items in the master data associated with the group number "001" in database 140 shown in FIG. 4, or information regarding only some of the items. Detailed information may include, in addition to the information associated with the group number "001" in database 140 shown in FIG. 4, the man-hours for the products included in the group.

If the tasks for the products indicated by detailed information includes an urgent task, information to that effect may be added so that the urgent task can easily be recognized. For example, if a task for the product with the production number "101" is urgent, the background color of the field of this production number may be changed to red. If the tasks for the products indicated by detailed information includes a task in progress, information to that effect may be added. For example, if a task for the product with the production number "102" is in progress, the background color of the column that includes this production number may be changed to yellow. Note that the urgent task or the task in progress may be designated in response to the user's operation performed on operation unit 122.

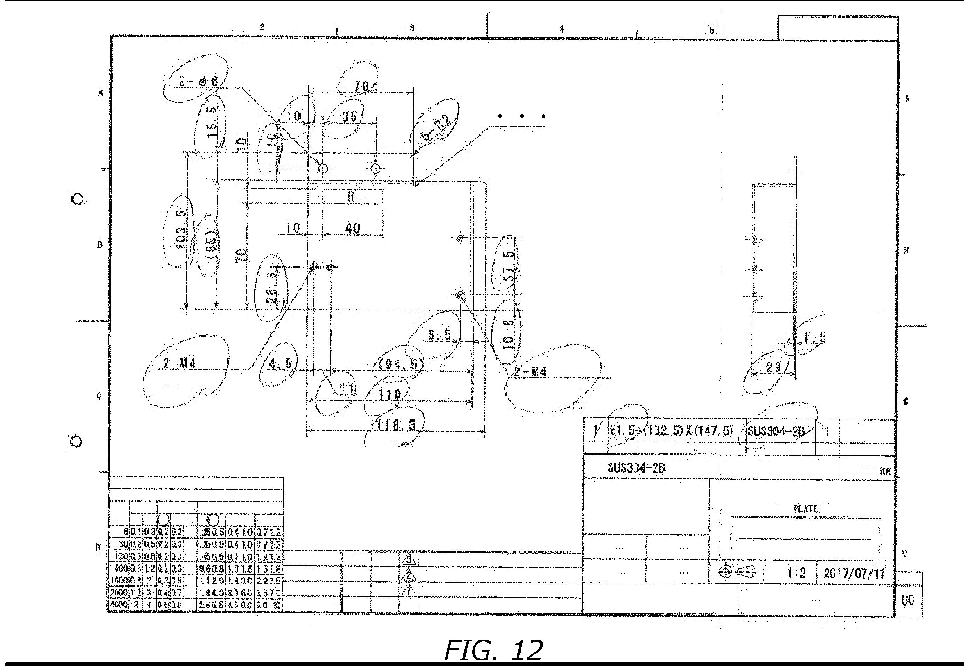

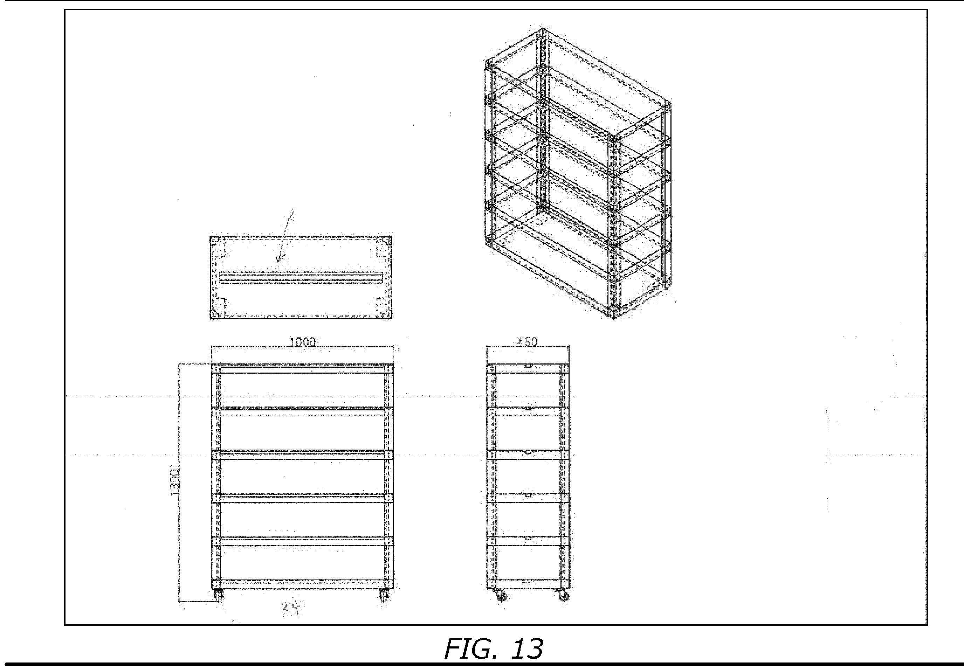

Individual schedule screen 160 is provided with "field diagram" button 165. "Field diagram" button 165 is used to perform an operation to display a field diagram. This "field diagram" refers to the actual diagrams used in tasks. FIGS. 12 and 13 are diagrams showing examples of field diagrams. For example, if the user presses "field diagram" button 165 after performing an operation to select the product with the production number "101" using operation unit 122, the diagram with the diagram number "201" will be displayed on display unit 121. Specifically, diagram data that represents the diagram has been stored in storage 113 of server apparatus 110 in advance, and is transmitted from server apparatus 110 to terminal apparatus 120. Thereafter, a diagram corresponding to this diagram data is displayed on display unit 121. Note that the operation performed to display the field diagram is not limited to pressing "field diagram" button 165, but may be an operation performed by double-clicking the area corresponding to the target product in area 162, for example.

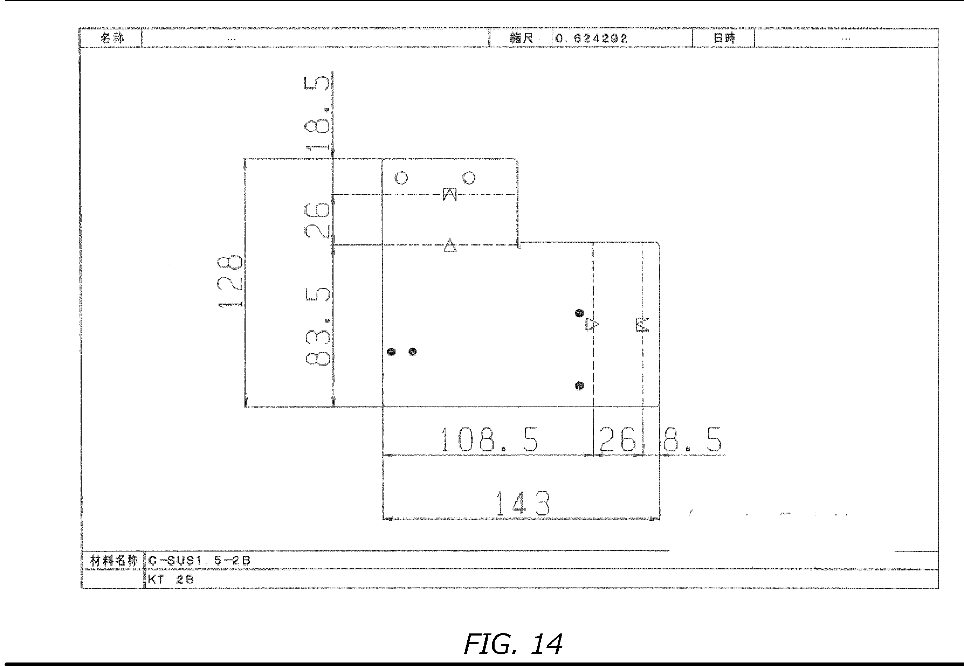

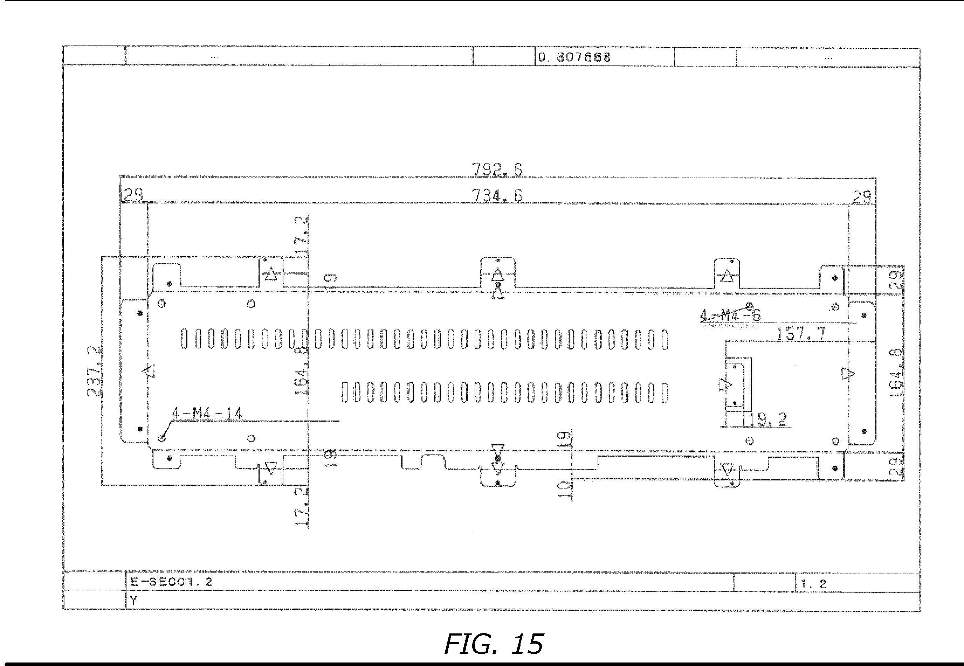

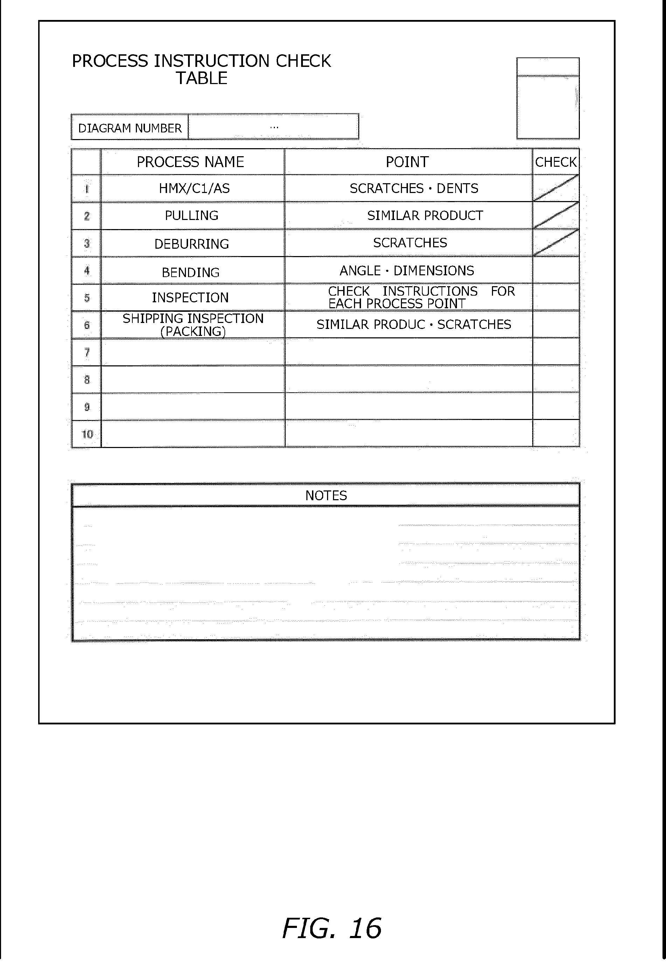

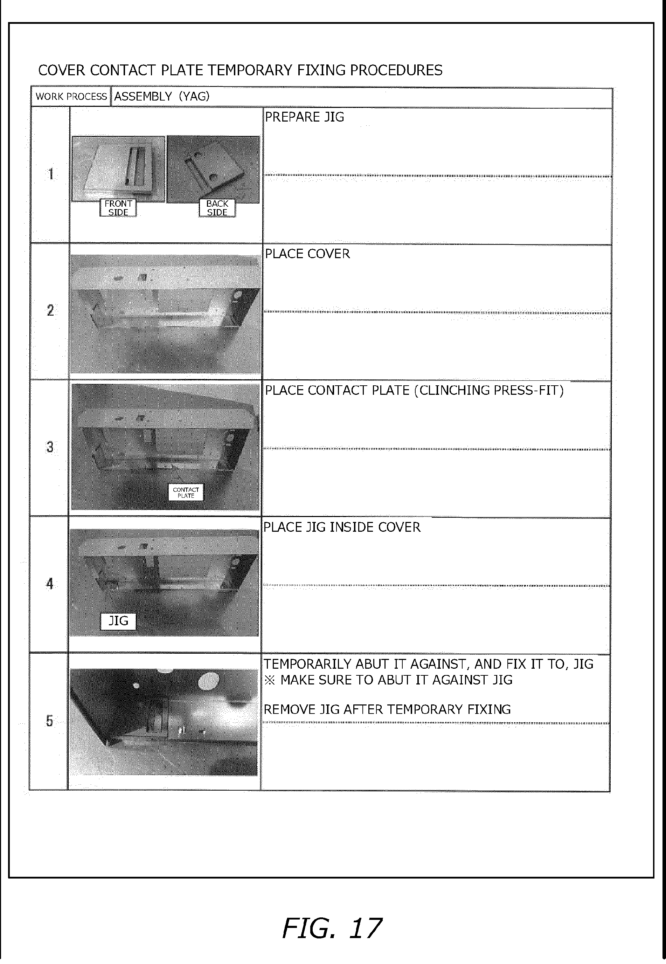

Individual schedule screen 160 is provided with "diagram selection display" button 166. This "diagram selection display" button 166 is used to perform an operation to display a diagram for assistance in the manufacture of products. Diagrams for assistance in the manufacture of products may include, for example, at least one of the development diagrams shown in FIGS. 14 and 15, the process instruction diagram shown in FIG. 16, the diagram showing work procedures shown in FIG. 17, a diagram showing work precautions, a subcontract diagram, and a subcontract document. For example, if the user presses "diagram selection display" button 166 after performing an operation to select the product with the production number "101" using an operation unit 122, displays a list of diagrams for assistance in the manufacture of the product with the production number "101". Upon the user performing an operation to select the desired diagram from the list of diagrams using operation unit 122, the desired diagram is displayed on display unit 121 in the same manner as the field diagrams described above.

Area 163 displays progress information that indicates the progress of the tasks for the products included in the group for which tasks are assigned to worker A. For example, upon the user performing an operation to select the product with the production number "101" using operation unit 122, area 163 displays progress information that is associated with the production number "101" in database 140 shown in FIG. 4. For example, the worker can grasp whether or not the task for the previous process for the product with the production number "101" has been completed, by browsing this progress information using terminal apparatus 120. Therefore, the worker can easily determine whether or not the task of manufacturing the product can be started.

Individual schedule screen 160 is provided with "latest status" button 167. "Latest status" button 167 is used to perform an operation to update information. For example, upon the user pressing "latest status" button 167 using operation unit 122, the information displayed on individual schedule screen 160 is updated to the latest information.

Individual schedule screen 160 is provided with "worker change" button 168. "Worker change" button 168 is used to perform an operation to change the worker. For example, upon the user pressing "worker change" button 168 after performing an operation to select the group with the group number "001" using operation unit 122, worker change screen 170 is displayed.

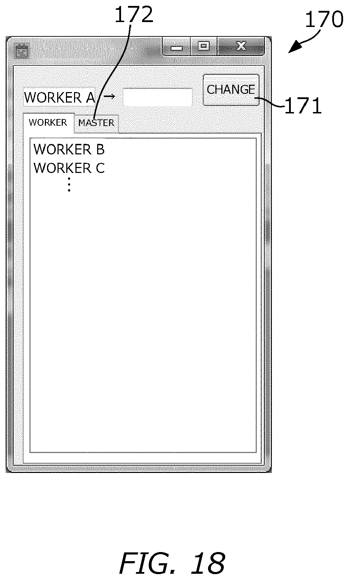

FIG. 18 is a diagram showing an example of worker change screen 170. Change screen 170 displays a list of workers. Change screen 170 is provided with "change" button 171. For example, upon the user pressing "change" button 171 after performing an operation to select "worker B" from the list of workers using operation unit 122, the worker of the task for the group with the group number "001" is changed from "worker A" to "worker B".

Change screen 170 may also be provided with "master" tab 172. For example, upon the user performing an operation to select "master" tab 172 using operation unit 122, the worker registered in advance regarding the address of customer X that has ordered the products in the group with the group number "001" is displayed. The user may change the worker of the task for the group with the group number "001" to the worker registered in advance.

Returning to FIG. 11, individual schedule screen 160 is provided with tab 169. Upon the user performing an operation to select tab 169 using operation unit 122, an individual schedule list, detailed information, and progress information that are similar to those shown in FIG. 11 are displayed with respect to the tasks to which no workers are assigned. Specifically, the group number associated with the worker's name "-", which indicates that no worker has been assigned, is selected from schedule 141 shown in FIG. 5, and information that is associated with the selected group number is displayed.

If a new diagram is used for a task included in the list of individual schedules displayed in response to the selection of tab 169, information to that effect may be added so that the user can easily recognize that there is a task that uses a new diagram. For example, a letter or a symbol indicating the new diagram may be displayed in the field of the item number of the target task included in the list of individual schedules.

According to the above-described embodiment, groups that each include at least one kind of product that is to be manufactured is created, and a task schedule for manufacturing products is displayed for each group. Therefore, it is easier to see the task schedule for manufacturing the products even when the quantity or the number of types of the products to be manufactured is large. In addition, information regarding the tasks of manufacturing individual products included in each group is displayed together with the schedule for the group, which improves the efficiency of the tasks of manufacturing products.

In addition, overall schedule screen 150 displays a Gantt chart showing overall schedule 141. Therefore, for example, the administrator can grasp the overall work plan by browsing the Gantt chart using terminal apparatus 120. Furthermore, overall schedule screen 150 displays production management information, progress information, and property information together with this Gantt chart. Therefore, the administrator can change schedule 141 to be more appropriate content by browsing these pieces of information using terminal apparatus 120. Furthermore, for example, if area 155 shown in FIG. 8 is provided with "field diagram" button 165 similar to that of individual schedule screen 160 shown in FIG. 11 so that the field diagram for each product is displayed from overall schedule screen 150, the administrator can assign appropriate workers to tasks to which no worker has been assigned, by viewing the field diagram.

In addition, individual schedule screen 160 displays a list of individual schedules, detailed information, and progress information. Therefore, a worker can perform a task while viewing the schedule of the tasks assigned to the worker and the diagrams for the individual products using terminal apparatus 120. As a result, the worker can easily grasp the schedule of the tasks that the worker is going to do. Therefore, it is possible to reduce the number of meetings to confirm the task schedule.

The present invention is not limited to the above-described embodiment. The above-described embodiment may be implemented in a modified form as in the following examples. At this time, two or more of the following modifications may be used in combination.

In the above-described embodiment, a specified delivery date specified by the user may be used as a predetermined condition used for creating a group, instead of the delivery date specified by the customer. For example, the user may set the same specified delivery date for a plurality of kinds of products ordered by the same customer and the delivery dates thereof specified by the customer are close to each other. In such a case, these products may be grouped into a single group.

In the above-described embodiment, if a machine performs a task of the work process, the task may be assigned to the machine instead of the worker or in addition to the worker.

In the above-described embodiment, the order of the individual schedules in the list is not limited to the order according to at least one of the following: the start date, the subcontract arrival date, the priority date, and the priority level. The order of the individual schedules in the list may be any order. For example, the individual schedules in the list may be arranged in ascending order of customer delivery dates.

In the above-described embodiment, the scheduled end date of the task of the previous process may be used as the subcontract arrival date of the next process.

In the above-described embodiment, the configurations of server apparatus 110 and terminal apparatus 120 are not limited to the examples shown in FIGS. 1 to 3. Server apparatus 110 may include other hardware elements, or some hardware elements of server apparatus 110 may be provided in another apparatus. Also, at least some of the functions of server apparatus 110 may be realized by terminal apparatus 120 or another apparatus. For example, all the functions of server apparatus 110 may be realized by terminal apparatus 120. If this is the case, server apparatus 110 need not be provided.

The present invention may be provided as a program to be executed on server apparatus 110 or terminal apparatus 120. This program may be provided in the state of being recorded on a computer-readable recording medium, or may be downloaded via a communication line such as the Internet.

### Modification regarding Subgroups

In the above-described embodiment, subgroups may be created in addition to the above-described groups, and schedules may be created and displayed for each subgroup. Such a subgroup indicates, for example, a work unit for actual work in the field. The products included in a subgroup may differ in at least either the delivery destination or the delivery date. In such a case, group creation section 117 creates a subgroup that includes at least one product according to other conditions that are different from the predetermined conditions used to create a group. The other conditions may be different for each work process. For example, other conditions include a condition that at least one kind of product has the same color or material. Schedule creation unit 118 creates a schedule for each subgroup. Display control unit 119 displays the schedule for each subgroup on display unit 121.

For example, in a painting process, it takes time and effort to change paint colors. Therefore, it may be more efficient to paint the same color at once. Therefore, in the painting process, subgroups may be created according to other conditions that indicate that the colors of the products are the same. For example, of the products that are ready to be subjected to the painting process, products that are to be painted white may be grouped into a single group, and products that are to be painted yellow may be grouped into another group. Note that the specific method for creating subgroups is the same as the method for creating groups illustrated in the above-described embodiment.

Here, the paint color is specified by the customer when the order is received, and is stored in database 140 shown in FIG. 4, for example. However, different customers may use different expressions for the same paint color. For example, the color white may be called "white powder", "urethane white", or "ivory white", depending on the customer. Similarly, the color yellow may be called "yellow" or "danger color" depending on the customer. However, if the same paint color is used even though the expressions are different, it is preferable that they are grouped into the same subgroup. Therefore, the paint color name specified by the customer may be converted to the paint color name that is actually used, and thereafter a subgroup may be created based on the converted paint color name. For example, a table that associates the names of the paint colors before conversion to the names of the paint colors after conversion with each other is used to convert the name of the paint color. For example, the paint color names "white powder", "urethane white", and "ivory white" are all converted to "white", and products whose paint color is "white" after conversion are grouped into a single subgroup. The paint color names "yellow" and "danger color" are both converted to "yellow", and products with the paint color "yellow" after conversion are grouped into a single subgroup.

A schedule is created for each subgroup created in such a manner. For example, if there are a plurality of painting lines, the first painting line on a given day is assigned a subgroup of products with the paint color "white", and the second painting line is assigned a subgroup of products with the paint color "yellow". In general, changing the paint color may require certain processing to avoid mixing the colors before and after the painting process. Therefore, efficiency may degrade every time the color is changed. However, by assigning a subgroup to each painting line, for example, products with the paint color "white" are painted on one painting line together with other products with the paint color "white", so that even products have been painted with "white" on another painting line in the past, the products will not be assigned to the other painting line. Therefore, it is possible to prevent, for example, a schedule in which only one product is painted with white while other products are painted with yellow on a given painting line.

The schedule for each subgroup is displayed. For example, individual schedule screen 160 shown in FIG. 11 is provided with tabs corresponding to the painting lines or workers. For example, upon the user performing an operation to select the tab corresponding to the first painting line using operation unit 122, the individual schedule list, detailed information, and progress information similar to those shown in FIG. 11 are displayed for the tasks assigned to the first painting line. On the other hand, upon the user performing an operation to select the tab corresponding to the second painting line using operation unit 122, the individual schedule list, detailed information, and progress information similar to those shown in FIG. 11 are displayed for the tasks assigned to the second painting line.

In addition, in a punching process, for example, the yield is higher if products that are made of the same material are cut together. Therefore, in the punching process, subgroups may be created according to other conditions that indicate that the materials of the products are the same. For example, of the products that are ready to be subjected to the punching process, products that are to be manufactured using the same material may be grouped into a single subgroup. This same material means that the material properties and thickness are the same, for example.

A schedule is created for each subgroup created in such a manner. For example, if there are a plurality of processing machines that carries out punching processing, the first processing machine is assigned a subgroup of products made from a certain material, and the second processing machine is assigned a subgroup of products made from another material different from the material, at a certain date and time. In this case, processing data used in punching processing may also be created according to the subgroup. For example, processing data may be created so that the products in the subgroup can be obtained from a single piece of material.

The schedule for each subgroup is displayed. For example, individual schedule screen 160 shown in FIG. 11 is provided with tabs corresponding to the processing machines or workers. For example, upon the user performing an operation to select the tab corresponding to the first processing machine using operation unit 122, the individual schedule list, detailed information, and progress information similar to those shown in FIG. 11 are displayed for the tasks assigned to the first processing machine. On the other hand, upon the user performing an operation to select the tab corresponding to the second processing machine using operation unit 122, the individual schedule list, detailed information, and progress information similar to those shown in FIG. 11 are displayed for the tasks assigned to the second processing machine. This modification makes it possible to grasp the schedule corresponding to the tasks of each manufacturing process, for each subgroup. Also, even when the work unit is different for each manufacturing process, it is possible to grasp the schedule for each work unit without changing the original group.

### Modification regarding Worker Assignment

In the above-described embodiment, the method for assigning tasks to workers is not limited to the above-described example. For example, a task may be assigned to a worker based on the work history thereof in the past. For example, if the task of manufacturing the same product was performed in the past, the task may be assigned to the worker who performed the task. Also, depending on the product, a worker may be designated by the customer. The task of manufacturing such products may be assigned to the worker designated by the customer. For example, if worker A is designated by the customer as the worker for the welding process for a certain product, the task of the welding process for this product is to be assigned to worker A. Here, even if the task of the welding process for this product is temporarily carried out by a worker other than worker A for some reason, the task is to be assigned to worker A again the next time the task of the welding process for this product is to be carried out.

### Modification regarding Information indicating Work Status

In the above-described embodiment, the individual schedule list may include status information that indicates the work status of the manufacturing process that is immediately prior to the target manufacturing process that is to be carried out by the designated worker, of a plurality of manufacturing processes (hereinafter referred to as "status information regarding the previous process"), and status information that indicates the work status of the target manufacturing process (hereinafter referred to as "status information regarding the target process"). For example, database 140 shown in FIG. 4 or schedule 141 shown in FIG. 5 includes status information regarding the previous process and status information regarding the target information. These pieces of status information are input according to an operation performed by the user on operation unit 122, for example. The individual schedule list on individual schedule screen 160 shown in FIG. 11 includes status information regarding the previous process and status information regarding the target information.

For example, the manufacturing processes for sheet metal products includes a plurality of manufacturing processes such as a bending process and a welding process. The individual schedule list shown in FIG. 11 shows the schedule of the tasks for the group assigned to worker A that is to carry out the tasks for the welding process. Therefore, the welding process is the target process. In this case, status information regarding the previous process included in this individual schedule list indicates work status regarding the bending process that is the previous process to the welding process. The ratio of the products for which the previous process has been completed, to the products in the group, may be used as status information regarding the previous process. For example, if a group includes five kinds of products, the bending process has been completed for one of them, but has not been completed for the remaining four kinds of products, status information regarding the previous process for this group is "1/5". In addition, when status information regarding the previous process indicates that the task for the previous process has not been completed, the background color of the status information regarding the previous process may be changed to a prominent color such as orange. In such a case, status information regarding the target process indicates the work status of the welding process. The ratio of the products for which the target process has been completed, to the products in the group, may be used as status information regarding the target process. For example, if a group includes two kinds of products, the welding process has been completed for one of them, but has not been completed for the remaining one kind of products, status information regarding the target process for this group is "1/2". According to this modification, it is possible to determine whether or not the target process can be started, by viewing status information regarding the previous process. Also, it is possible to grasp the work status of the target process by viewing process information regarding the target process.

### Modification regarding Delay Warning

In the above-described embodiment, if there is a delay in the schedule of the target manufacturing process, a warning may be displayed on the schedule of a manufacturing process that is prior to the target manufacturing process. In such a case, if there is a delay in the schedule of the target manufacturing process for manufacturing at least one kind of product included in the group, of a plurality of manufacturing processes, display control unit 119 displays a warning on the schedule of a manufacturing process that is prior to the target manufacturing process.

For example, there may be a case of receiving an order from a customer to manufacture a product with a short delivery time, and to strictly adhere to the delivery date. When such an order is received, the ordered product is registered in the emergency list in response to an operation performed by the user using operation unit 122. This emergency list is to be stored in storage 113, for example. In this case, in order that the tasks for the products registered in the emergency list can easily be recognized, a letter or a symbol indicating the urgent task is displayed in the field of the number of days of delay of the urgent task included in the individual schedule list as shown in FIG. 11, for example. Also, if there is a delay in scheduled start date and time of the task of the target process of the tasks for the products registered in the emergency list, warning information may be displayed on the schedule of a process that is prior to the target process to urge the worker to hurry up with the task. For example, the manufacturing processes for sheet metal products includes a plurality of manufacturing processes such as a bending process and a welding process. Here, it is assumed that there is a delay in the scheduled start date and time of a task of the welding process for a group. In this case, if the task of the bending process that is immediately prior to the welding process has not been completed, warning information may be displayed on individual schedule screen 160 of the worker to which this group is assigned for the bending process to urge the worker to hurry up with the task for that group. Furthermore, products for which warning is displayed are not limited to products ordered with short delivery time and strict delivery date. Even in the case of a product ordered with a normal delivery date, if there is a delay in the schedule of the task of manufacturing the product, a warning may be displayed on the schedule. According to this modification, it is possible to find the product of which the work schedule is delayed.

### Modification regarding Delivery Date Simulation

In the above-described embodiment, when an order is received from a customer, the user may temporarily input the contents of the order into database 140 so that the schedule for manufacturing the ordered product is displayed on display unit 121. For example, temporary master data is input based on the contents of the temporarily input order, and is stored in database 140 shown in FIG. 4. Also, temporary schedule 141 shown in FIG. 5 is created based on the temporary master data. Thereafter, various screens shown in FIGS. 6 to 11 are displayed based on temporary schedule 141. By viewing these screens, the user can see, for example, whether or not the product can be manufactured according to the customer's desired delivery date. Also, even if the product cannot be manufactured according to the customer's desired delivery date, the user can see the shortest delivery date by which the product can be manufactured. It is possible to improve customer satisfaction by adjusting the conditions of customers and orders based on such information. As described above, management system 100 according to the present invention may be used not only for product production management but also as a sales support tool for simulating a delivery date of the products to be manufactured.

### Reference Signs List

- 100:: Management System
- 110:: Server Apparatus
- 111:: Memory
- 112:: Processor
- 113:: Storage
- 114:: Communication Interface
- 115:: Bus
- 116:: Acquisition Unit
- 117:: Group Creation Unit
- 118:: Schedule Creation Unit
- 119:: Display Control Unit
- 120:: Terminal Apparatus
- 121:: Display Unit
- 122:: Operation Unit

## Claims

1. A management apparatus comprising:
a group creation unit that creates in accordance with predetermined conditions at least one group that includes at least one of a plurality of products to be manufactured;
a schedule creation unit that creates a schedule for manufacturing the plurality of products for each of the at least one group; and
a display control unit that displays on a display unit the schedule for each of the at least one group, together with information on a task for manufacturing each of the at least one of the plurality of products included in the at least one group.

2. The management apparatus according to claim 1,
wherein the predetermined conditions include a condition that the at least one of the plurality of products has the same delivery destination and the same delivery date, and
the at least one of the plurality of products included in the at least one group satisfies the predetermined conditions.

3. The management apparatus according to claim 1 or 2,
wherein the predetermined conditions further include a condition that the at least one of the plurality of products that has the same delivery destination and the same delivery date is to be manufactured using a diagram already used for another product manufactured by a worker,
the at least one of the plurality of products included in the at least one group satisfies the predetermined conditions, and
the schedule creation unit assigns to the worker a task of manufacturing the at least one group.

4. The management apparatus according to any one of claims 1 to 3,
wherein the display control unit displays on the display unit a Gantt chart that represents the schedule for each of the at least one group for each of at least one worker.

5. The management apparatus according to any one of claims 1 to 4,
wherein the display control unit displays on the display unit a list of an individual schedule for a target group from among the schedule, together with information on a task for manufacturing each of the at least one of the plurality of products included in the target group, the target group being assigned to a designated worker.

6. The management apparatus according to claim 5,
wherein the display control unit displays on the display unit the list of the individual schedule together with progress information on the task for manufacturing each of the at least one of the plurality of products included in the target group.

7. The management apparatus according to claim 5,
wherein the plurality of products is manufactured using a plurality of manufacturing processes, and
the list of the individual schedule includes status information on a task in a manufacturing process, from among the plurality of manufacturing processes, carried out immediately prior to a target manufacturing process carried out by the designated worker.

8. The management apparatus according to claim 5 or 7,
wherein the list of the individual schedule includes status information on a task in a target manufacturing process carried out by the designated worker.

9. The management apparatus according to claim 1,
wherein the group creation unit additionally creates at least one subgroup that includes at least one of the plurality of products in accordance with another condition that is different from the predetermined conditions,
the schedule creation unit additionally creates a schedule for each of the at least one subgroup, and
the display control unit displays on the display unit the schedule for each of the at least one subgroup.

10. The management apparatus according to claim 9,
wherein the other condition includes a condition that the at least one of the plurality of products has the same color or is made of the same material.

11. The management apparatus according to claim 1,
wherein the plurality of products is manufactured using a plurality of manufacturing processes, and
when there is a delay in the schedule for a target manufacturing process, from among the plurality of manufacturing processes, carried out to manufacture the at least one of the plurality of products included in the at least one group, the display control unit displays a warning on the schedule for a manufacturing process that is prior to the target manufacturing process.

12. A management system comprising
a management apparatus and a terminal apparatus,
wherein the management apparatus includes:
a group creation unit that creates in accordance with predetermined conditions at least one group that includes at least one of a plurality of products to be manufactured;
a schedule creation unit that creates a schedule for manufacturing the plurality of products for each of the at least one group; and
a display control unit that displays on a display unit the schedule for each of the at least one group, together with information on a task for manufacturing each of the at least one of the plurality of products included in the at least one group, and
the terminal apparatus includes the display unit.

13. A program for enabling a computer to carry out:
a step of creating in accordance with predetermined conditions at least one group that includes at least one of a plurality of products to be manufactured;
a step of creating a schedule for manufacturing the plurality of products for each of the at least one group; and
a step of displaying on a display unit the schedule for each of the at least one group, together with information on a task for manufacturing each of the at least one of the plurality of products included in the at least one group.
